# EUROPEAN PATENT APPLICATION

(11) **EP 4 332 418 A1**
(43) Date of publication of application: **06.03.2024**
(21) Application number: 22193050.6
(22) Date of filing: 31.08.2022
(51) Int. Cl.: F16K 35/02, F16K 1/52, G05G 5/22, G05G 5/24, F16K 31/60, G05D 23/01, F24D 19/10, F24H 15/238, F16K 35/10

(54) **HEATING/COOLING SYSTEM PRE-SETTING ARRANGEMENT**

(71) Applicant: Danfoss A/S, 6430 Nordborg (DK)
(72) Inventor: Clausen, Anders Østergaard, 6430 Nordborg (DK); Vilhelmsen, Søren Nymand, 6430 Nordborg (DK)
(74) Representative: Keil & Schaafhausen Patentanwälte PartGmbB

(57) **Abstract**

A heating/cooling system pre-setting arrangement (1) is provided, the pre-setting arrangement (1) comprising a housing (2) and presetting means (11, 12) defining a maximum flow through the valve arrangement (1) at a given pressure, wherein the presetting means comprise a presetting element (11) actuatable by means of a setting ring (6), wherein the setting ring (6) comprises a first geometry (7) and the housing (2) comprises a second geometry (8), the first geometry (7) and the second geometry (8) preventing rotation of the setting ring (6) when they are in engagement.

Actuation of such a presetting arrangement (1) should be comfortable.

To this end holding means (14, 15) are provided holding the setting ring (6) in a position in which the first geometry (7) is out of engagement of the second geometry (8).

## Description

The present invention relates to a heating/cooling system pre-setting arrangement comprising a housing and pre-setting means defining a maximum flow through the valve arrangement at a given pressure, wherein the pre-setting means comprise a pre-setting element actuatable by means of a setting ring, wherein the setting ring comprises a first geometry and the housing comprises a second geometry, the first geometry and the second geometry preventing rotation of the setting ring when they are in engagement.

In a heating/cooling system a heat carrying fluid is guided through heat exchangers. When the system is used for cooling, the heat carrying fluid is colder than the temperature of the room. When the room is to be heated, the temperature of the heat carrying fluid is higher than the room temperature. When the fluid flows through the heat exchanger, it exchanges heat with the room.

Usually, a heating/cooling system comprises several heating circuits or heat exchangers, which do not have all the same flow resistance. This means that a heating circuit having a lower flow resistance will receive a larger amount of heat carrying fluid, whereas a heating circuit having a larger flow resistance receives only a smaller amount of heat carrying fluid.

In order to adjust the flow of fluid through the several heating circuits, it is known to use pre-setting arrangements. A pre-setting arrangement limits the flow through a circuit to a maximum even if a valve which controls the flow of the heat carrying fluid is completely open.

Pre-setting is usually performed when the heating/cooling system is installed or when changes have been made in the heating/cooling system. Thus, pre-setting is only made in a very few situations and the pre-setting once made should not be changed.

A pre-setting arrangement as described at the outset is known, for example, from US 4 585 208 A. The pre-setting means are actuated by means of a setting ring. The setting ring is in driving arrangement with the pre-setting means, i.e. when the setting ring is rotated, the position of the pre-setting means is changed. The setting ring comprises a first geometry in form of inner teeth which are in engagement with a second geometry in form of outer teeth at the housing. In order to rotate the setting ring, it is necessary to move the setting ring axially until it comes out of engagement with the housing. The setting ring is loaded with a spring, so that after the pre-setting has been finished, the setting ring is shifted back axially, so that the inner teeth come into engagement with the outer teeth.

When several heat circuits of the heating/cooling system have to be adjusted by performing the pre-setting, the installer has to lift the setting ring, rotate it until the desired pre-setting has been reached, and then give free the setting ring. This kind of work is not very comfortable.

The object underlying the invention is to allow a comfortable pre-setting.

This object is solved with the heating/cooling system as described at the outset in that holding means are provided holding the setting ring in a position in which the first geometry is out of engagement of the second geometry.

When pre-setting is necessary, an installer has usually performed pre-setting for a certain number of circuits of the heating/cooling system at the same time. In many cases, a single action of pre-setting of a circuit is not sufficient. Once the pre-setting for a specific circuit has been finished, pre-setting for other circuits has to be performed. This can change the flow conditions in the circuit in which pre-setting has already been finished. The installer thus has to start again to manipulate the pre-setting arrangement of the first main circuit. The present invention now allows a more comfortable working. The installer has to move the setting ring to the position, in which the first geometry is out of engagement of the second geometry. In this position, the holding means hold the setting ring. Thus, when the installer goes to the next circuit of the heating/cooling system, the setting ring is not moved to a position, in which the two geometries engage each other. Only after finishing the pre-setting for all circuits of the heating/cooling system, it is necessary to move back the setting ring to the position, in which the two geometries engage each other.

In an embodiment of the invention the setting ring is moveable in axial direction in relation to the housing and the holding means produce a holding force acting in axial direction. The axial direction relates to the axis of rotation of the setting ring. When the holding means use a holding force in the axial direction, this is sufficient to prevent a movement of the setting ring back to the position, in which the two geometries engage each other.

In an embodiment of the invention the holding means comprise at least one spring element which is pretensioned in radial direction. Once the setting ring has been moved to a position in which it can be rotated, the spring element can at least partly move radially to block an axial movement of the setting ring.

In an embodiment of the invention the spring element is integral with the setting ring. The spring element is in one piece with the setting ring, so that assembly of the pre-setting arrangement is simple and the risk to lose parts is minimized.

In an embodiment of the invention the spring element is in form of a finger. The finger is at one end connected to the setting ring or to the housing, wherein the other end is pretensioned in radial direction.

In an embodiment of the invention the spring element forms part of a snap connection. Once the setting ring has been moved in a position in which the first geometry is out of engagement with the second geometry, the snap connection engages and locks the setting ring in place when the snap connection is formed at least partly by the spring element, the snap connection is releasable, so that there is no problem to release the snap connection in order to push back the setting ring into the position, in which it cannot be rotated, since the first geometry is in engagement with the second geometry.

In an embodiment of the invention the spring element engages a recess in a counterpart, when the first geometry is out of engagement of the second geometry. When the spring element is connected to the setting ring, the counterpart is the housing or another part which is rotatable with the setting ring and axially fixed and the spring element can engage a recess in this counterpart.

In an embodiment of the invention the spring element comprises a protrusion engaging the recess. This is a simple way to make sure that the spring element can engage the recess.

In an embodiment of the invention the spring element rests against a stop face in a counterpart, when the first geometry is out of engagement of the second geometry. When the spring element rests against the counterpart, for example the housing, it blocks or at least hinders a movement of the setting ring back to the position, in which the first geometry engages the second geometry.

In an embodiment of the invention the stop face is inclined in relation to the axial direction. This has the following effect: when the spring element rests against the inclined surface, it holds the setting ring in the position, in which the first geometry is out of engagement with the second geometry. However, when the installer pushes on the setting ring, the spring element is moved radially inwardly due to the inclination of the stop face, so that the spring element is moved back radially in order to release the holding function.

In an embodiment of the invention the holding means comprise friction surfaces at the setting ring and at the housing producing a friction force, when the first geometry is out of engagement of the second geometry. The friction surfaces can be used alternatively or in addition to the other holding means described above. When the friction surfaces form the holding means, the setting ring is held by friction in a position, in which it can be rotated.

In an alternative or additional embodiment, the holding means comprise a stop element which is insertable between the setting ring and the housing, when the first geometry is out of engagement of the second geometry. When the setting ring has been moved to a position in which it can be rotated, there is usually a gap or groove between the setting ring and the housing. The stop element can now be inserted into this gap to block a movement of the setting ring back to a position, in which it can no longer be rotated.

In an embodiment of the invention safety means are provided which are actuatable to prevent a movement of the setting ring into a position in which it can be rotated. The safety means make the pre-setting arrangement tamperproof. They are installed or actuated after the pre-setting has been finished. In this way it is possible to prevent manipulation of the pre-setting arrangement by unauthorized persons.

In an embodiment of the invention the safety means are in form of a ring having a changeable inner diameter, the ring being positionable between the setting ring and a protrusion of the housing or another part which is axially fixed. The ring can be, for example, in form of an O-ring or in form of a cable tie. Due the changeable inner diameter of the ring the ring can be moved over the protrusion of the housing and inserted into a gap between the setting ring and the housing.

In an embodiment of the invention the setting ring comprises a cone-shaped lifting surface. This cone-shaped lifting surface allows a good grip for the installer when he has to shift the setting ring axially into a position, in which it can be rotated.

Preferred embodiments of the invention will now be described with reference to the drawing, in which:
- Fig. 1: shows schematically a pre-setting arrangement of a heating/cooling system,
- Fig. 2: shows a schematic sectional view of the pre-setting arrangement,
- Fig. 3: shows a detail A of Fig. 2 in larger scale,
- Fig. 4: shows the second embodiment of the detail A of Fig. 2 in larger scale,
- Fig. 5: shows a third embodiment of the detail A of Fig. 2 in larger scale,
- Fig. 6: shows another embodiment of the pre-setting arrangement with the setting ring in block position,
- Fig. 7: shows the embodiment of Fig. 6 with setting ring in rotating position, and
- Fig. 8: shows the embodiment of Fig. 6 with safety means.

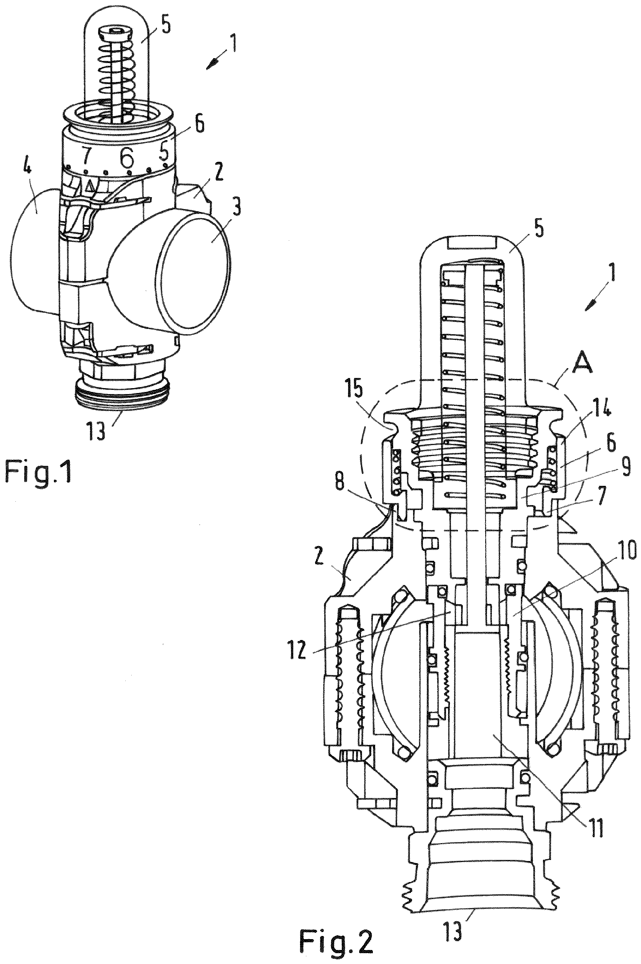

Fig. 1 shows schematically a pre-setting arrangement 1 of a heating/cooling system. The pre-setting arrangement 1 comprises a housing 2 having a first port 3 and a second port 4. The ports 3, 4 can be part of a manifold through which a heat carrying fluid flows.

A flow measuring device 5 is connected to the pre-setting arrangement to determine a flow through the pre-setting arrangement 1. The flow measuring device 5 remains after pre-setting has been finished. However, it can also be removed after pre-setting has been finished.

In order to change the pre-setting, a setting ring 6 is provided. The setting ring 6 can be rotated around an axis of the setting ring 6, when the pre-setting is to be performed. When pre-setting has been finished, the setting ring 6 is fixed in relation to the housing 2.

Fig. 2 schematically shows further elements of the pre-setting arrangement 1. In all Fig. the same elements are denoted with the same reference numerals.

The setting ring 6 comprises a first geometry 7 and the housing 2 comprises a second geometry 8. In the present embodiment the first geometry 7 is in form of outer teeth and the second geometry 8 is in this embodiment in form of inner teeth. When the setting ring 6 is in the position shown in Fig. 2, the first geometry 7 is in engagement with the second geometry 8 and the setting ring 6 cannot be rotated.

In order to perform pre-setting, the setting ring 6 is lifted, i.e. it is shifted along its axis of rotation so that the first geometry 7 comes out of engagement with the second geometry 8. In this position the setting ring 6 can be rotated with respect to the housing 2. The setting ring 6 is in driving connection with a transmission member 9. The transmission member 9 is connected to a driving member 11 which is in threaded connection with a pre-setting element 10. When the setting ring 6 is rotated, the rotational movement of the setting ring 6 is translated into an axial movement of the pre-setting element 10, so that the pre-setting element 10 can adjust the size of an opening 12 through which a heat carrying liquid can flow from one of the ports 3, 4 to a port 13 which is connected to a circuit of the heating/cooling system to which a pre-setting means is connected. It is also possible to combine the pre-setting arrangement with a flow control valve.

The transmission member 9 and the driving member 11 are axially fixed. The pre-setting element 10 is radially fixed.

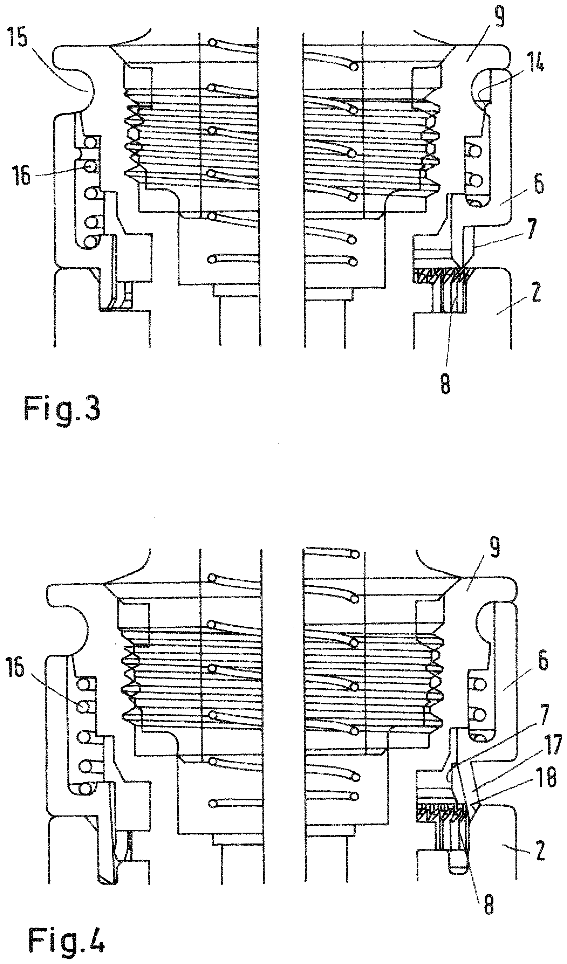

Fig. 3 shows in a somewhat larger scale a detail A of a first embodiment of the pre-setting arrangement 1. The left side of Fig. 3 shows the setting ring 6 in blocked position, i.e. secured against rotation, and the right-hand side shows the setting ring 6 in a position in which it can be rotated with respect to the housing 2.

The setting ring 6 comprises a protrusion 14 at its radially inner side. The transmission member 9 comprises a groove 15 at its radially outer side. When the setting ring 6 is lifted against the force of a spring 16, the protrusion 14 comes into engagement with the groove 15. To this end it is only necessary that the setting ring 6 slightly enlarges its inner diameter which is possible, since the setting ring 6, more precisely its circumferential wall, has some spring characteristics, i.e. forms back into its initial form once the protrusion 14 has entered the groove or the recess 15. Thus, the engagement of the protrusion 14 in the recess 15 produces a holding force acting against the force of the spring 16. Once the protrusion 14 has entered the recess 15, the first geometry 7 is held outside of the second geometry 8, so that the setting ring 6 can be rotated to rotate the transmission member 9.

Once pre-setting has been finished, only a small pressure onto the setting ring 6 in a direction towards the housing 2 is necessary to bring the setting ring 6 in its initial position shown in the left-hand side of Fig. 3, in which the first geometry 7 comes into engagement with the second geometry 8. However, without such a slight pressure of actuation, the setting ring 6 remains in the position shown in the right-hand side of Fig. 3 to allow the rotation of the setting ring 6 and the transmission member 9.

Thus, an installer can bring the setting rings 6 of several pre-setting arrangements of a heating/cooling system in the released position shown in the right-hand side of Fig. 3 and can then perform pre-setting in all circuits of the heating/cooling system without having the necessity to lift the setting ring 6 each time a re-adjustment of the pre-setting is required.

Fig. 4 shows a second embodiment of the detail A of Fig. 2.

The setting ring 6 is provided with a finger 17 forming a spring element. The finger 17 is integral with the setting ring 6 and is pretensioned in radial direction, more precisely the free end of the finger 17 is pretensioned radially outwardly.

The housing 2 comprises a stop surface 18 which is inclined to an axial direction, i.e. to the axis of rotation of the setting ring 6.

As soon as the setting ring 6 has been lifted against the force of the spring 16, the free end of finger 17 moves radially outwardly and comes to abut against the stop surface 18. In this position, the force holding the setting ring 6 in the position shown on the right-hand side of Fig. 4 in which the first geometry 7 and the second geometry 8 are out of engagement, is larger than the force produced by the spring 16. Thus, the setting ring 6 remains in the position shown on the right-hand side of Fig. 4, so that the installer can perform the pre-setting.

After finishing the pre-setting, only a slight axial pressure onto the setting ring 6 is required in order to move the setting ring 6 back to the position shown in the left half of Fig. 4.

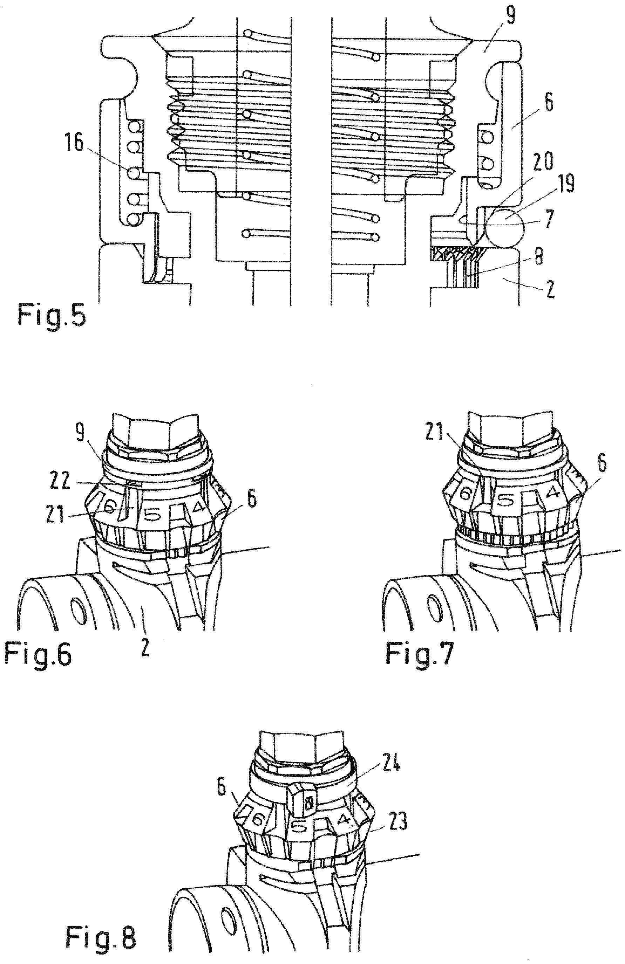

Fig. 5 shows a third embodiment in which the setting ring 6 is held in the adjustment position by means of a stop element 19 which is inserted into a gap 20 between the setting ring 6 and the housing 2. The stop element 19 can be, for example, in form of an O-ring which is widened in radial direction in order to move it over the setting ring 6. Once pre-setting has been performed, the stop element 19 can be removed.

Fig. 6 to 8 show a further embodiment of the pre-setting arrangement in which the same elements are denoted with the same reference numerals.

The setting ring 6 comprises a spring element in form of a finger 21. The transmission member 9 comprises a recess 22. When the setting ring 6 is lifted, as shown in Fig. 7, an end of the finger 21 comes into engagement with the recess 22 in the transmission member 9. The end of the finger 21 can have a protrusion which is moved into the recess 22.

Furthermore, the setting ring 6 comprises a cone-shaped lifting surface 23 which facilitates handling of the setting ring 6. The installer can grip below a protrusion formed by the cone-shaped lifting surface 23 to lift the setting ring 6.

Fig. 8 furthermore shows a safety element 24 in form of a cable tie. The safety element 24 can be arranged between the setting ring 6 and the transmission member 9 in order to prevent an axial movement of the setting ring 6. Instead of a cable tie, the safety element 24 can be in form of an O-ring.

In the embodiment shown in Fig. 3, and 6 to 8, it has been shown that the counterpart for fixing the setting ring 6 in the position in which it can be rotated, is the transmission member 9. However, even in these embodiments, the counterpart can be the housing 2.

In a way not specifically shown, the holding means can also be in the form of two friction surfaces, which are tensioned against each other with a component of force in radial direction. The friction between these two friction surfaces can also be sufficient to withstand the force of the spring 16.

In some embodiments, in particular in the embodiments of Fig. 6 to 8, the spring 16 can be omitted. In this case there can be another snap connection also in the engaged position, for example, in the lower position of an element like the finger 17.

## Claims

1. Heating/cooling system pre-setting arrangement (1) comprising a housing (2) and pre-setting means (10, 12) defining a maximum flow through the valve arrangement (1), wherein the pre-setting means (10, 12) comprise a pre-setting element (10) actuatable by means of a setting ring (6), wherein the setting ring (6) comprises a first geometry (7) and the housing (2) comprises a second geometry (8), the first geometry (7) and the second geometry (8) preventing rotation of the setting ring (6) when they are in engagement, **characterized in that** holding means (14, 15; 17, 18; 19; 21, 22) are provided holding the setting ring (6) in a position in which the first geometry (7) is out of engagement of the second geometry (8).

2. Heating/cooling system pre-setting arrangement according to claim 1, **characterized in that** the setting ring (6) is movable in axial direction in relation to the housing (6) and the holding means (14, 15; 17, 18; 19; 21, 22) produce a holding force acting in axial direction.

3. Heating/cooling system pre-setting arrangement according to claim 1 or 2, **characterized in that** the holding means (14, 15; 17, 18; 19; 21, 22) comprise at least one spring element which is pretensioned in radial direction.

4. Heating/cooling system pre-setting arrangement according to claim 3, **characterized in that** the spring element is integral with the setting ring (6).

5. Heating/cooling system pre-setting arrangement according to claim 3 or 4, **characterized in that** the spring element is in form of a finger (17).

6. Heating/cooling system pre-setting arrangement according to any of claims 3 to 5, **characterized in that** the spring element forms part of a snap connection.

7. Heating/cooling system pre-setting arrangement according to any of claims 3 to 6, **characterized in that** the spring element engages a recess (15. 22) in a counterpart, when the first geometry (7) is out of engagement of the second geometry (8).

8. Heating/cooling system pre-setting arrangement according to claim 6, **characterized in that** the spring element comprises a protrusion (14) engaging the recess (15; 22).

9. Heating/cooling system pre-setting arrangement according to any of claims 3 to 5, **characterized in that** the spring element rests against a stop face (18) in a counterpart, when the first geometry (7) is out of engagement of the second geometry (8).

10. Heating/cooling system pre-setting arrangement according to claim 9, **characterized in that** the stop face (18) is inclined in relation to the axial direction.

11. Heating/cooling system pre-setting arrangement according to any of claims 1 to 10, **characterized in that** the holding means (14, 15; 17, 18; 19; 21, 22) comprise friction surfaces at the setting ring and at the counter part producing a friction force, when the first geometry (7) is out of engagement of the second geometry (8).

12. Heating/cooling system pre-setting arrangement according to any of claims 1 to 11, **characterized in that** the holding means (14, 15; 17, 18; 19; 21, 22) comprise a stop element which (19) is insertable between the setting ring (6) and the housing (2), when the first geometry (7) is out of engagement of the second geometry (8).

13. Heating/cooling system pre-setting arrangement according to any of claims 1 to 12, **characterized in that** safety (24) means are provided which are actuatable to prevent a movement of the setting ring (6) into a position in which it can be rotated.

14. Heating/cooling system pre-setting arrangement according to claim 13, **characterized in that** the safety means (24) are in form of a ring having a changeable inner diameter, the ring being positionable between the setting ring (6) and a protrusion of the counterpart.

15. Heating/cooling system pre-setting arrangement according to any of claims 1 to 14, **characterized in that** the setting ring (6) comprises a cone-shaped lifting surface (23).
